# EUROPÄISCHE PATENTSCHRIFT

(11) **EP 0 481 109 B1**
(45) Veröffentlichungstag und Bekanntmachung des Hinweises auf die Patenterteilung: **20.07.1994**
(21) Anmeldenummer: 90119839.0
(22) Anmeldetag: 16.10.1990
(51) Int. Cl.: C09J 167/02, C09J 123/06, D06M 17/00

(54) **Schmelzklebermasse zum rasterförmigen Beschichten von Flächengebilden, insbesondere von Einlagestoffen**
Hot melt adhesives for patterned coating of flexible sheet, especially interlining material
Colles fusibles pour le revêtement sous forme de trames de surfaces flexibles, en particulier de doublures

(43) Veröffentlichungstag der Anmeldung: 22.04.1992
(73) Patentinhaber: KUFNER TEXTILWERKE GmbH, D-81311 München (DE)
(72) Erfinder: Hefele, Josef, Dr., W-8032 Gräfelfing (DE)
(74) Vertreter: Hansen, Bernd, Dr. Dipl.-Chem.

(56) Entgegenhaltungen:
- EP-A- 0 184 715
- DE-A- 2 231 723
- GB-A- 2 081 279
- US-A- 3 657 389
- US-A- 4 146 586
- US-A- 4 217 426

## Beschreibung

Diese Erfindung betrifft eine Schmelzklebermasse zum rasterförmigen Beschichten von Flächengebilden, beispielsweise von Textilien, Papieren, Leder, Schaumstoffen oder Kunststoff-Folien. Insbesondere betrifft die Erfindung eine Schmelzklebermasse zum rasterförmigen Beschichten von fixierbaren Einlagestoffen für die Bekleidungsindustrie sowie einen Einlagestoff, der mit einer solchen Schmelzklebermasse versehen ist.

Es sind Schmelzklebermassen bekannt, deren Basisschicht vorzugsweise in Form einer wässrigen Paste rasterförmig auf ein zu beschichtendes Flächengebilde aufgebracht wird. Darauf wird ein Schmelzklebepulver aufgestreut. Das Flächengebilde wird dann mit einer schnell rotierenden Schlägerwalze in Vibration versetzt. Der Überschuss an Schmelzkleberpulver wird abgeblasen und abgesaugt, und das an dem rasterförmigen Aufdruck haftende Pulver wird zusammen mit der wässrig-pastösen Masse der Basisschicht getrocknet und gesintert. Das gesinterte Produkt stellt die Schmelzklebermasse dar. Der vorzugsweise in Punktform ausgebildete Beschichtungsraster besteht somit aus der Basisschicht der getrockneten und gesinterten Schmelzkleberpaste, auf der das angesinterte Schmelzkleber-Streupulver als zweite Schicht aufgebracht ist. Die beschichteten Flächengebilde werden in Bahnenform oder als Zuschnitte mit anderen bahnenförmigen oder zugeschnittenen Flächengebilden unter Einwirkung von Druck und vergleichsweise milder Temperatur zu reinigungsbeständigen Verbundstoffen mit besonders hoher Waschbeständigkeit und Haftung laminiert.

Es sind zahlreiche Schmelzklebermassen mit reinigungsbeständigen Eigenschaften für das Siebdruckverfahren bekannt. Diese sind hauptsächlich aus wässrig-pastösen Mischungen aus Schmelzkleberfeinpulvern gebildet, welche auch in etwas gröberer Kornform für sich alleine direkt zum Beschichten im Streu- oder Tiefdruckverfahren (Pulverpunktverfahren) aufgetragen werden können. Die heute meistbenutzten reinigungsbeständigen Schmelzklebermassen basieren auf Copolyamiden, Copolyestern oder Niederdruck-Polyethylenen. Ebenso wurden Polyurethane vorgeschlagen und hierfür eingesetzt. Andere, ebenfalls verwendete Schmelzklebermassen sind nicht reinigungsbeständig.

Aus US-A-4 217 426 ist ein Schmelzkleber bekannt, der durch Mischen von Polyethylenen und (Co)Polyestern hergestellt wird. Die Polyethylene weisen ein niedriges Molekulargewicht auf, die Schmelzviskosität liegt im Bereich von etwa 50 bis 30 000 mPas (cP) bei 150°C. Der Polyethylenanteil liegt bei 3 bis 30 Gew.%.

Zum Anteigen der Schmelzkleberfeinpulver zur Herstellung der Basisschicht werden spezielle Suspendier- bzw. Dispergiermittel benutzt, die den Anteigungen eine saubere Druckfähigkeit verleihen, ohne aber die Reinigungsbeständigkeit zu reduzieren. Daneben sollen die Dispergiermittel noch besondere Eigenschaftsmerkmale hervorrufen, beispielsweise die Verhinderung einer Sedimentation der eingemischten Pulver, eine konturenscharfe Ausbildung des Druckes, eine gesteuerte Penetration der Schmelzkleberpaste, eine Verhinderung des Durchschlages durch den Oberstoff, die Vermeidung eines Rückschlages beim Fixieren oder die Ausschaltung der Kantenverschweissung beim Zuschneiden der Flächengebilde. Derartige Dispergiermittel sind beispielsweise in den Patentschriften DE-B-2 007 971, DE-B-2 229 308, DE-B-2 407 505, DE-B-2 507 504 und DE-B-3 510 109 beschrieben worden. Den Dispergiermitteln können Weichmacher beigefügt sein. Häufig werden noch Additive aus hochmolekularem Polyethylenoxid zugefügt, wodurch die Zügigkeit der Paste erhöht wird.

Zum rasterförmigen Beschichten im Siebdruckverfahren werden Siebrundschablonen benutzt, die in regelmässiger oder unregelmässiger Anordnung Perforationen besitzen, durch die die Schmelzklebermassen mit einer Innenrakel auf den Einlagestoff aufgedruckt werden. Während früher Siebschablonen mit vergleichsweise weitem Abstand und grossen Öffnungen benutzt wurden, werden in jüngerer Zeit immer mehr feinere Beschichtungen mit enger Aneinanderreihung kleinerer Öffnungen unter Ausbildung eng nebeneinanderliegender kleiner Schmelzkleberpunkte durchgeführt. Ausserdem sind die Einlagestoffe leichter, feiner und notwendigerweise dichter geworden, um eine saubere Druckausführung zu erhalten. Während früher Einlagebeschichtungen in einem 11 bis 17 mesh-Raster mit 11 bis 17 Punkten/inch in linearer Anordnung üblich waren, sind heute bereits Einlagen mit 38 Punkten pro inch in linearer Anordnung im Einsatz. Mit der Verfeinerung der Raster ist die Beschichtungsproblematik gewachsen, und gleichzeitig haben die Reinigungsprobleme zugenommen, da die gröbere Rasteranordnung mit grösseren Einzelpunkten eine höhere Haftfestigkeit erzeugt als die feinere Rasteranordnung mit kleineren Einzelpunkten.

Aber auch die Verwendung von Einlagestoffen hat eine graduelle Änderung erfahren. Aus modischen und wohl auch aus Umweltschutzgründen werden immer mehr Einlagestoffe in Kleidungsstücken verwendet, die eher gewaschen als gereinigt werden, so beispielsweise Einlagen für Freizeitbekleidung.

Dieser Trendwandel hat dazu geführt, dass die ursprünglich für Oberbekleidungsstücke ausschliesslich verwendeten Copolyamid-Schmelzklebermassen mehr und mehr durch Copolyester-Schmelzklebermassen ersetzt worden sind, da Copolyester zwar nicht die besonders gute chemische Reinigungsfestigkeit der Copolyamide aufweisen, aber eine bessere Waschbeständigkeit besitzen. Die Anwendung der ausreichend chemisch reinigungsbeständigen und sehr gut waschbeständigen Niederdruck-Polyethylene scheidet für die heutige Oberbekleidungskonfektion aus, weil die Niederdruck-Polyethylene mit einem Schmelzpunkt von etwa 130°C zu hoch schmelzen und daher Fixierspalttemperaturen von etwa 150°C und mehr benötigt werden. Die heute in der Konfektionspraxis benutzten Fixierspalttemperaturen zwischen Einlage und Oberstoff liegen durchwegs niedriger. Niederdruck-Polyethylene sind daher heute ausschliesslich auf Hemdeneinlagen beschränkt. Der Wandel in der Einlagefertigung und -anwendung hat schliesslich auch aus Kosten- und Qualitätsgründen dazu geführt, dass die Beschichtungsmenge, die pro m² Einlagestoff aufgebracht wird, deutlich reduziert wurde. Während früher Auftragsmengen von 18 bis 25 g/m² üblich waren, liegen diese Auftragsmengen heute bei Einlagestoffen etwa zwischen 8 und 18 g/m². Mit einer Reduzierung der Auftragsmenge konnte die Industrie, die derartige Einlagestoffe herstellte, das Bedürfnis nach einem weicheren und fliessenderen Fall der fixierten Kleidungsstückbereiche erfüllen.

Um die Probleme hinsichtlich der reduzierten Wasch- und Reinigungsbeständigkeit sowie hinsichtlich der schwächeren Haftfestigkeit zu lösen, sind verbesserte Schmelzklebermassen, aber auch verbesserte Beschichtungstechnologien und verbesserte Beschichtungsträger entwickelt worden. Besonders bewährt hat sich dabei die sogenannte Duobeschichtung, bei der jeder Beschichtungspunkt aus zwei Schichten besteht, wie dies eingangs erwähnt ist. Eine derartige Duobeschichtung ist beispielsweise in den Patentschriften DE-B-2 214 236, DE-B-2 231 723, DE-B-2 536 911 und DE-B-3 230 579 beschrieben. Gemäß DE-B-2 231 723 wird eine Schmelzkleberpaste als Basisschicht verwendet, die ausschließlich aus Polyester besteht.

In neuester Zeit ist eine Indirekt-Beschichtungsmethode hinzugekommen, bei der die Beschichtung erst auf einen Zwischenträger aufgebracht und dann von hier aus auf die Einlagebahn übertragen wird. Ein derartiges Beschichtungsverfahren ist beispielsweise in EP-A-0 219 376 und in EP-A-0 365 711 beschrieben.

Die Beschichtungsträger wurden dadurch verbessert, dass feinere Garne mit feintitrigen Einzelfasern bis hin zum Mikrofaserbereich sowie Synthetikgarne, beispielsweise Hochbauschacrylgarne und gekräuselte Polyestergarne verwendet wurden. Weiterhin sind die ursprünglich verwendeten Gewebe immer stärker durch andere Flächengebilde abgelöst worden, beispielsweise durch Webwirkwaren oder durch Webwirk- und Wirkvliese, wobei diese zuletzt genannten Stoffe eine Kombination aus Vliesen mit Webwirkwaren und Wirkwaren darstellen. Trotz dieser Fortschritte konnten noch nicht alle Bedürfnisse, insbesondere der Bekleidungsindustrie, erfüllt werden. Als weiterhin bestehender Mangel wird insbesondere eine Versteifung sowie eine erhöhte Knitteranfälligkeit eines Fixierverbundes aus Einlage und Oberstoff, insbesondere bei Feinrasterbeschichtungen, angesehen. Ganz besonders wird aber als negativ angesehen, dass bei feinbeschichteten Einlagestoffen auf feinen Oberstoffen, beispielsweise Blusenoberstoffen, die Waschbeständigkeit des Fixierverbundes trotz der Verwendung von Copolyestern nur mässig und vielfach sogar mangelhaft ist. Es besteht also weiterhin ein erhebliches Bedürfnis nach einer unter milden, heute üblichen Fixiertemperaturen aufbügelbaren Einlage mit geringerem Beschichtungsgewicht, die einen weichen Fixiergriff vermittelt, einwandfrei waschbar ist und nach dem Waschprozess eine hohe Haftfestigkeit beibehält.

Eine derartige Einlage konnte bisher noch nicht realisiert werden. Man kann sich dem bestehenden Bedürfnis beispielsweise auch dadurch annähern, dass verbesserte Schmelzklebermassen verwendet werden, die bereits bei deutlich reduziertem Auftragsgewicht die gewünschte hohe Haftfestigkeit, die auch nach dem Waschen bzw. Reinigen beibehalten wird, erbringen.

Der Erfindung liegt daher die Aufgabe zugrunde, eine Schmelzklebermasse mit einer Schmelzkleberpaste auf Copolyesterbasis als Basisschicht und einer Deckschicht aus einem Schmelzkleber zur Verfügung zu stellen, die bei verminderter Beschichtungsmenge eine hohe Haftfestigkeit sowie eine hervorragende Wasch- und Reinigungsfestigkeit aufweist. Ausserdem sollen dadurch die Kosten für die Herstellung eines Fixierverbundes erheblich vermindert werden.

Diese Aufgabe wird mit einer Schmelzklebermasse der eingangs genannten Art gelöst, wobei erfindungsgemäss die Schmelzkleberpaste der Basisschicht eine Mischung aus Copolyester und Niederdruck-Polyethylen in einem Gewichtsverhältnis von 2:1 bis 2:3, bezogen auf das Trockengewicht der Bestandteile, enthält und wobei das Niederdruck-Polyethylen eine Korngröße von maximal 80 µm, einen Schmelzpunkt im Bereich von 122 bis 137 °C und einen Schmelzindex im Bereich von 5 bis 30 g/10 min Auslaufzeit bei einer Temperatur von 190 °C und einer Druckbeaufschlagung von 21,6 N aufweist.

Vorteilhafte Weiterbildungen und Ausgestaltungen der erfindungsgemässen Schmelzklebermasse sind Gegenstand der Unteransprüche. Die erfindungsgemässe Schmelzklebermasse eignet sich insbesondere zur Herstellung von rasterförmigen Beschichtungen von Flächengebilden, insbesondere zur Beschichtung von Einlagestoffen für die Oberbekleidung. Erfindungsgemäss wird weiterhin ein Einlagestoff zur Verfügung gestellt, der mit der Schmelzklebermasse versehen ist und eine hohe Haftfestigkeit auch nach dem Waschen aufweist.

Die Schmelzkleberpaste stellt vorzugsweise eine wässrig-pastöse Mischung der genannten Bestandteile dar. In diesem Fall liegt der verdampfbare, ganz überwiegend aus Wasser bestehende Gehalt im Bereich von 48 bis 68 Gew.%, bezogen auf die nicht getrocknete Schmelzklebermasse.

Die Schmelzklebermasse wird erfindungsgemäss vorzugsweise so auf den zu beschichtenden Gegenstand, beispielsweise einen Einlagestoff für ein Bekleidungsstück, aufgebracht, dass zunächst die Schmelzkleberpaste als Basisschicht im Siebdruckverfahren aufgebracht wird. Darauf wird eine Ober- bzw. Deckschicht aufgebracht. Als Deckschicht eignet sich insbesondere ein Schmelzkleber-Pulver, das aufgestreut wird. Nach dem Aufstreuen wird der Einlagestoff in Vibration versetzt, und anschliessend wird das nicht an der Basisschicht anhaftende Pulver entfernt.

Nach einem üblichen Trocknungs- und Sinterprozess werden die rasterförmig beschichteten Flächengebilde unter Druck- und Temperatureinwirkung mit anderen Flächengebilden zu einem reinigungsbeständigen Verbund fixiert, wobei dieser eine hohe Wasch- und Reinigungsfestigkeit aufweist. Gegenüber einer gleichartigen Rasterbeschichtung mit einer Schmelzkleberpaste, die als Schmelzkleberpulver ausschliesslich Copolyester enthält, kann bei gleicher Schmelzklebermenge nach einer Wäsche mehr als die doppelte Haftfestigkeit und nach einer chemischen Reinigung etwa die doppelte bis vierfache Haftfestigkeit erreicht werden. Die gleiche Steigerung erhält man nach dem Fixieren.

Diese haftungssteigernden Eigenschaften sind insofern bemerkenswert, als sie bereits bei Fixierspalttemperaturen auftreten, die erheblich unter denen liegen, die bei Verwendung von Niederdruck-Polyethylen erforderlich sind. Durch die verbesserte Haftfestigkeit wird insbesondere ermöglicht, dass die notwendige Beschichtungsmenge reduziert werden kann, um somit einen weicheren, weniger knitteranfälligen und weniger steifen Griff und Fall des Fixierverbundes zu erreichen. Die im allgemeinen notwendige Beschichtungsmenge liegt bei der erfindungsgemässen Schmelzklebermasse aus getrockneter und gesinterter Basischicht und angesinterter Deckschicht im Bereich von 6 bis 15 g/m². Durch Mitverwendung des wesentlich preisgünstigeren Niederdruck-Polyethylens und durch eine Reduzierung der Beschichtungsmenge können auch die Entstehungskosten für derartige Einlagen erheblich reduziert werden. Durch die Verwendung von Niederdruck-Polyethylenen wird die Haftfestigkeit bei chemischen Reinigungen nicht negativ beeinflusst.

Das in der Schmelzkleberpaste enthaltene Niederdruck-Polyethylen stellt ein Pulver mit einer Korngrösse von maximal etwa 80 µm dar und hat einen Schmelzpunkt bzw. -bereich zwischen 122 und 137°C. Der Schmelzindex, der bei einer Temperatur von 190°C und einer Druckbeaufschlagung von 21,6 N Stempeldruck entsprechend DIN 53 735 gemessen ist, liegt zwischen 5 und 30 g/10 min Auslaufzeit. Zur Charakterisierung der Copolyester, die für die Schmelzkleberpaste verwendet werden, ist die Angabe eines Schmelzpunktes weniger geeignet. Die Copolyester zeigen beim allmählichen Aufheizen Maxima und Minima der Wärmeaufnahmeenergie auf. Das Maximum der Energieaufnahme im Schmelzbereich, gemessen mit dem Thermoanalysator nach dem Mettler-System TA 3000, mit dem eine Temperatursteigerung von 10°C/min vorgenommen wurde, soll für erfindungsgemäss verwendete Copolyester zwischen 105 und 135°C, vorzugsweise zwischen 110 und 125°C, liegen. Der Schmelzindex der verwendeten Copolyester, der bei einer Temperatur von 160°C und einer Druckbeaufschlagung von 21,6 N Stempeldruck gemessen wurde, liegt bei 5 bis 50 g/10 min Auslaufzeit, vorzugsweise bei 10 bis 40 g/10 min Auslaufzeit. Die Korngrösse liegt ebenfalls unter 80 µm.

Zum Anteigen der Mischung aus Copolyester und Niederdruck-Polyethylen werden Dispergiermittel benutzt. Hierfür eignen sich Zusammensetzungen, die für pastöse Schmelzklebermassen auf Copolyamidbasis verwendet werden. Als Beispiele seien solche genannt, die in den eingangs erwähnten Patentschriften, DE-B-2 007 971, DE-B-2 229 308, DE-B-2 407 505 und DE-B-3 510 109, beschrieben sind, auf die hier ausdrücklich Bezug genommen wird. Besonders eignen sich Dispergiermittel mit einem Andickungsmittel auf Polyacryl- bzw. Polymethacrylsäurebasis, die in der nassen Schmelzkleberpaste in einem Anteil von 0,5 bis 2,0 Gew.%, bezogen auf das Gewicht der nassen Schmelzkleberpaste, eingesetzt werden sollen. Ebenso eignen sich Polyvinylpyrrolidon, Zelluloseglykolsäure oder auch andere Verdicker. Zusätzlich können Carbonsäuren, vorzugsweise aliphatische Monocarbonsäuren, Fettsäuren, Wachssäuren oder auch Molkensäure verwendet werden, die teilweise als Salze vorliegen sollten. Die Säuren haben vorzugsweise 15 bis 25 Kohlenstoffatome. Der Anteil liegt ebenso bei 0,5 bis 2,0 Gew.%, bezogen auf das Gewicht der nassen Schmelzkleberpaste. Die Salzbildung erfolgt vorteilhafterweise mit Ammoniak, wobei der pH-Wert der Schmelzkleberpaste zwischen 7,0 und 10,0 liegen kann. Als zusätzliche Andickungsmittel können ebenfalls noch wasserlösliche Cellulosederivate, beispielsweise Hydroxyethylcellulose, in einer Menge von 0,05 bis 0,3 Gew.% enthalten sein. Die Paste kann auch Weichmacher in einer Menge bis ca. 6 Gew.%, bezogen auf die nasse Schmelzkleberpaste, enthalten, beispielsweise o- oder p-Toluolsulfonamid oder N-alkylierte Toluolsulfonamide. Auch eine geringe Menge hochmolekulares Polyethylenoxid kann beigefügt sein. Der Trockenanteil der Schmelzkleberpaste beträgt vorzugsweise 32 bis 52 Gew.%.

Die Deckschicht der erfindungsgemässen Schmelzklebermasse enthält vorzugsweise ein Copolyamid, Copolyester oder auch Mischungen davon. Besonders bevorzugt ist dabei, wie sich überraschenderweise herausgestellt hat, die Verwendung von Copolyamid. Vorzugsweise wird die Deckschicht auf die Basisschicht aufgestreut, wobei das Material der Deckschicht ein Pulver ist. Das Copolyamidpulver hat überwiegend einen Kornbereich von 80 bis 200 µm. Als Pulver für die Deckschicht können handelsübliche Produkte verwendet werden. Beim Aufstreuen von Copolyester kann es vorteilhaft sein, das Pulver vor dem Aufstreuen mit einem Netzmittel in einer Menge von 0,1 bis 1,0 Gew.% zu behandeln, um eine gleichmässige Pulververteilung, eine sichere Pulverüberschussentfernung sowie eine weitere Haftwertsteigerung zu erhalten. Geeignete Netzmittel stellen nichtionogene Netzmittel dar, beispielsweise Polyglykolether, wie Alkylpolyglykolether oder Alkylarylpolyglykolether. Zweckmässigerweise wird das verwendete Netzmittel dazu in einem Lösungsmittel, beispielsweise Alkohol (Methyl-, Ethyl- oder Isopropylalkohol) aufgelöst und dann in einem Schnellmischer mit dem Pulver vermischt. Nach der Trocknung an Luft kann das so erhaltene Pulver zum Streuen verwendet werden. Es ist auch möglich, Pulver zu verwenden, die vor der Herstellung oder danach mit Weichmacher modifiziert worden sind. Bei der zweischichtigen Beschichtung aus Schmelzkleberpaste und Pulver beträgt das Gewichtsverhältnis von Schmelzklebertrockenpaste zu Schmelzkleberpulver etwa 1:1.

Das Pulver hat vorzugsweise ein Maximum der Wärmeenergieaufnahme im Schmelzbereich bei einer Temperatur zwischen 90 und 110°C, wenn eine Messung mit einem Thermoanalysator nach dem Mettler-System TA 3000 mit einer Temperatursteigerung von 10°C/min durchgeführt wird. Der Schmelzindex soll sowohl bei der Verwendung von Copolyester- als auch bei Copolyamidpulver bei 20 bis 60 g/10 min Auslaufzeit, vorzugsweise bei 30 bis 50 g/10 min Auslaufzeit, liegen, wenn bei einer Temperatur von 160°C und einer Druckbeaufschlagung von 21,6 N Stempeldruck gemessen wird.

Die erfindungsgemässe Schmelzklebermasse wird nachfolgend unter Bezugnahme auf die folgenden Beispiele näher erläutert.

Die Schmelzkleberpasten, die als Basisschicht verwendet werden, werden wie folgt hergestellt:
Im Vakuum (0,1 bar) werden folgende Bestandteile miteinander vermischt:
50 Gew.-Teile Ausgangsdispersion A
130 Gew.-Teile Wasser
50 Gew.-Teile Copolyesterpulver I oder II
50 Gew.-Teile Niederdruck-Polyethylenpulver
3,0 Gew.-Teile Hoechst-Verdicker V 3748 (30%ige Polyacrylsäurederivat-Dispersion, hergestellt von Hoechst)
Die Ausgangdispersion A enthält durchwegs die folgende Zusammensetzung:
1350 Gew.-Teile Wasser
2 Gew.-Teile konzentrierter Ammoniak, Dichte 0,91 g/cm³
125 Gew.-Teile Stearin (65% Stearinsäure, 35% Palmitinsäure)
120 Gew.-Teile Latecoll AS^{R} (10%ige Lösung aus polyacrylsaurem Ammonium, ammoniak-alkalisch, pH = 11, Hersteller: BASF, Ludwigshafen)
4 Gew.-Teile Natrosol HR 250^{R} (Hydroxyethylcellulose, Hersteller: Hercules)

### BEISPIEL 1

Zur Herstellung einer ersten Paste (B1) wird folgender Copolyester (I) verwendet:
- Copolyester (I):: Platherm M 1400^{R},
Korngrösse 0 bis 80 µm
Schmelzindex (160°C, 21,6 N):
34 g/10 min
Schmelzbereich: 100 bis 127°C
Wärmeaufnahmepeak mit Mettlersystem
TA 3000: 124,8°C
Schüttdichte: 60,6 g/100 cm³
Hersteller: Atochem, Bonn

Das zur Herstellung der Paste (B1) verwendete Niederdruck-Polyethylen ist wie folgt definiert:
- ND-Polyethylen:: Abifor 1300^{R}
Korngrösse 0 bis 80 µm
Schmelzindex (190°C, 21,6 N):
20 g/10 min
Schmelzpunkt: 130°C
Wärmeaufnahmepeak mit Mettler-System
TA 3000: 129°C
Schüttdichte: 38 g/100 cm³
Hersteller: Billeter, Zürich, CH

Die Schmelzkleberpaste (B1), die einen Feststoffgehalt von 37% aufweist, wird kurz vor dem Beschichtungsvorgang aufgerührt. Die fliessfähige Schmelzkleberpaste wird durch die Perforationen einer 25-mesh-Siebschablone mit regelmässiger Punkteanordnung auf einen Beschichtungsträger mit leicht schräg aufgesetzter Rakel aufgerakelt. Der Lochdurchmesser der Perforationen beträgt 0,3 mm, die Wandstärke der Schablone 0,19 mm. Der Beschichtungsträger ist ein Textilstoff mit einem Gewicht von 35 g/m² und besteht aus einem Wirkvlies mit einem Vliesanteil von 30 g/m² aus PES/PA-Fasern (30%/70%) mit einer Faserstärke von 1,2 dtex. Das Vlies ist punktverschweisst und mit PES-Multifilkettfäden mit einer Fadenstärke von 44 dtex und einer Faserstärke von 1,5 dtex in nicht versetzter geschlossener Fransenbindung durchwirkt. Die Fransendichte in Querrichtung beträgt 11/inch. In Längsrichtung sind 10 Maschen pro inch ausgebildet. Die Auftragsmenge der Schmelzkleberpaste beträgt 13 g/m² Nasspaste; dies entspricht einer Menge von 5 g/m² Trockenpaste.

Unmittelbar nach dem Bedrucken wird die Beschichtung aus der Basisschicht mit einer Deckschicht aus Schmelzkleberpulver bestreut. Das aufgestreute Pulver stellt ein Copolyester dar, der wie folgt definiert ist:
- Copolyester (III):: Avabond 30 E^{R}
Korngrösse: 80 bis 200 µm
Schmelzindex (160°C, 21,6 N):
46 g/10 min
Schmelzbereich: 100 bis 120°C
Schüttdichte: 63,6 g/100 cm³
Hersteller: Avalon Chemical

Nach dem Bestreuen der Basisschicht mit dem Streupulver wird das Wirkvlies mit einem schnell rotierenden Schlägerwerk in Vibration versetzt. Das nicht an den Druckpunkten haften bleibende Streupulver wird durch Abblasen und Absaugen entfernt. Anschliessend wird bei 140°C getrocknet und Versuche zur Ermittlung der Haftfestigkeit wurden mit diesem schmelzkleberbeschichteten Wirkvlies vorgenommen. Die Ergebnisse sind in der Tabelle dargestellt.

### BEISPIEL 2

Zur Herstellung der Schmelzkleberpaste (B2) wurde ein Copolyester (II) verwendet, der wie folgt definiert ist:
- Copolyester (II):: Griltex 6 P^{R}
Korngrösse 0 bis 80 µm
Schmelzindex (160°C, 21,6 N):
14 g/10 min
Schmelzbereich: 110 bis 130°C
Wärmeaufnahmepeak mit Mettler-System TA 3000: 125,8°C
Schüttdichte: 65 g/100 ccm
Hersteller: Ems Chemie, Domat/Ems

Das zur Herstellung der Schmelzkleberpaste verwendete Niederdruck-Polyethylen entspricht dem gemäss Beispiel 1 verwendeten.

Die Auftragung dieser Schmelzkleberpaste erfolgte in gleicher Weise wie bei Beispiel 1. Als Schmelzkleber-Streupulver wurde der in Beispiel 1 angegebene Copolyester (III) verwendet.

Die mit der erfindungsgemässen Schmelzklebermasse gemäss Beispiel 2 hergestellten Beschichtungen wurden hinsichtlich der Haftfestigkeit untersucht. Die Ergebnisse sind in der Tabelle angegeben.

### BEISPIEL 3

Es wurde die gleiche Schmelzkleberpaste (B1) wie bei Beispiel 1 verwendet. Anstelle des Schmelzkleberpulvers gemäss Beispiel 1 wurde jedoch diesmal ein Copolyamid (IV) verwendet, das wie folgt definiert ist:
- Copolyamid (IV):: Griltex D 1302^{R}
Korngrösse 80 bis 200 µm
Schmelzindex (160°C, 21,6 N):
36 g/10 min
Schmelzbereich: 98 bis 124°C
Wärmeaufnahmepeak mit Mettler-System TA 3000: 100°C
Schüttdichte: 57,5 g/100 cm³
Hersteller: Ems Chemie, Domat/Ems

Die Auftragung der Schmelzkleberpaste und des Streupulvers erfolgte in gleicher Weise wie in Beispiel 1.

Die mit der erfindungsgemässen Schmelzklebermasse gemäss Beispiel 3 hergestellten Beschichtungen wurden hinsichtlich der Haftfestigkeit untersucht. Die Ergebnisse sind in der Tabelle angegeben.

### BEISPIEL 4

Es wurde die gemäss Beispiel 2 beschriebene Schmelzkleberpaste (B2) als Basisschicht verwendet. Das zur Herstellung der Deckschicht verwendete Schmelzkleberpulver war das gemäss Beispiel 3 verwendete Copolyamid (IV). Die Beschichtung erfolgte wie in Beispiel 1 beschrieben.

Die mit der erfindungsgemässen Schmelzklebermasse gemäss Beispiel 4 hergestellte Beschichtung wurde hinsichtlich der Haftungsfestigkeit untersucht. Die Ergebnisse sind in der Tabelle angegeben.

### VERGLEICHSBEISPIELE 1 BIS 3

Es wurden die nachfolgend angegebenen Schmelzkleberpasten (B3), (B4) und (B5) auf einen Beschichtungsträger aufgedruckt, ohne dass diesmal Schmelzkleberpulver als Deckschicht aufgebracht wurde. Es wurde eine 25-mesh-Siebschablone mit einem Lochdurchmesser von 0,4 mm und einer Wandstärke von 0,19 mm verwendet. Die Auftragsmenge der Schmelzklebermasse betrug jeweils etwa 10 g/m² Trockenmasse. Die für die Vergleichsbeispiele 1 bis 3 verwendeten Schmelzklebermassen wiesen folgende Zusammensetzung auf:
50 Gew.-Teile Ausgangsdispersion (A)
100 Gew.-Teile Wasser
100 Gew.-Teile Copolyesterpulver (I), (II) oder (V)
1,5 Gew.-Teile Hoechst-Verdicker V 34748^{R} (30%ige Polyacrylsäurederivat-Dispersion, Hersteller: Hoechst)
Für die einzelnen Vergleichsbeispiele 1, 2 und 3 wurden die folgenden Copolyesterpulver verwendet:

### Vergleichsbeispiel 1:

### Copolyester (I), vergl. Beispiel 1

### Vergleichsbeispiel 2:

### Copolyester (II), vergl. Beispiel 2

### Vergleichsbeispiel 3:

- Copolyester (V):: Avabond 30 E^{R}
Korngrösse: 0 bis 80 µm
(abweichende Körnung zu Avabond 30 E^{R} mit einer Korngrösse von 80 bis 200 µm; die sonstigen Eigenschaften sowie der Lieferant sind identisch wie beim Copolyester (III) gemäss Beispiel 1)

Die mit diesen Schmelzklebermassen gemäss den Vergleichsbeispielen 1 bis 3 hergestellten Beschichtungen wurden hinsichtlich der Haftfestigkeit untersucht. Die Ergebnisse sind in der Tabelle angegeben.

Zur Vornahme der Beurteilung der Haftfestigkeit wurden die beschichteten Textilträger, die alle mit einer Schmelzklebermenge von etwa 10 g/m² beschichtet worden sind, auf eine Baumwoll-Popeline-Oberfläche (117 g/m², Kett- und Schussdichte jeweils 280/10 cm) aufgebracht und fixiert. Die Fixierung erfolgt mit Hilfe einer Plattenpressung. Die Fixierdaten des Beschichtungsträgers mit Schmelzklebermassen gemäss den Beispielen 1 bis 4 waren wie folgt:

| | |
|---|---|
| Oberplattentemperatur: | 145°C |
| Unterplattentemperatur: | 100°C |
| Fixierspalttemperatur: | 128°C |
| Pressdruck: | 300 cN/cm² |
| Fixierzeit: | 15 s |

Die Fixierdaten bei einem Beschichtungsträger mit Schmelzklebermassen gemäss den Vergleichsbeispielen 1 bis 3 waren wie folgt:

| | |
|---|---|
| Oberplattentemperatur: | 155°C |
| Unterplattentemperatur: | 100°C |
| Fixierspalttemperatur: | 138°C |
| Pressdruck: | 300 cN/cm² |
| Fixierzeit: | 15 s |

**TABELLE**

| Haftwerte bei 10 g/m² Auftragsgewicht, ausgedrückt in cN/5 cm² | | | |
|---|---|---|---|
| Probe aus | nach Fixieren | nach Wäsche 60°C | nach chemischer Reinigung |
| Beispiel 1 | 3200 | 850 | 1700 |
| Beispiel 2 | 2350 | 850 | 1200 |
| Beispiel 3 | >4000 | 1750 | >4000 |
| Beispiel 4 | >4000 | 1600 | >4000 |
| Vergl.Beisp.1 | 650 | 450 | 1000 |
| Vergl.Beisp.2 | 750 | 450 | 900 |
| Vergl.Beisp.3 | 600 | 450 | 1100 |

Die gemessenen Haftwerte zeigen, dass die erfindungsgemässe doppelschichtige Beschichtung gemäss den Beispielen 1 bis 4 den einfachen Schmelzkleber-Pastenbeschichtungen gemäss den Vergleichsbeispielen 1 bis 3, die lediglich auf Copolyester basieren, weit überlegen sind. Überraschenderweise ergeben sich besonders herausragende Ergebnisse, wenn eine Schmelzklebermasse mit einer Basisschicht, die eine Mischung aus Copolyester und Niederdruck-Polyethylen enthält, und eine Deckschicht aus einem Schmelzkleberpulver aus Copolyamid verwendet wird (vergl. Beispiel 3 und Beispiel 4).

## Patentansprüche

1. Schmelzklebermasse zum rasterförmigen Beschichten von Flächengebildern, insbesondere von Einlagestoffen, mit einer Schmelzkleberpaste auf Copolyesterbasis als Basisschicht und einer hierauf aufsitzenden Schmelzkleber-Deckschicht,
**dadurch gekennzeichnet,** daß die Schmelzkleberpaste eine Mischung aus Copolyester und Niederdruck-Polyethylen in einem Gewichtsverhältnis von 2:1 bis 2:3, bezogen auf das Trockengewicht der Bestandteile, enthält und daß das Niederdruck-Polyethylen eine Korngröße von maximal 80 µm, einen Schmelzpunkt im Bereich von 122 bis 137 °C und einen Schmelzindex im Bereich von 5 bis 30 g/10 min Auslaufzeit bei einer Temperatur von 190 °C und einer Druckbeaufschlagung von 21,6 N entsprechenden DiN 53 735 aufweist.

2. Schmelzklebermasse nach Anspruch 1, dadurch **gekennzeichnet,** dass die Schmelzkleberpaste eine wässrig-pastöse Mischung aus Copolyester und Niederdruck-Polyethylen ist.

3. Schmelzklebermasse nach Anspruch 2, dadurch **gekennzeichnet,** dass der Trockenanteil der Schmelzkleberpaste 32 bis 52 Gew.% beträgt.

4. Schmelzklebermasse nach einem der Ansprüche 1 bis 3, dadurch **gekennzeichnet,** dass die Beschichtungsmenge der Schmelzklebermasse nach dem Trocknen und Sintern bei 6 bis 15 g/m² Flächengebilde liegt.

5. Schmelzklebermasse nach einem der Ansprüche 1 bis 4, dadurch **gekennzeichnet,** dass der Copolyester eine Korngrösse von weniger als 80 µm und einen Schmelzindex im Bereich von 5 bis 50 g/10 min Auslaufzeit bei einer Temperatur von 160°C und einer Druckbeaufschlagung von 21,6 N aufweist.

6. Schmelzklebermasse nach einem der Ansprüche 1 bis 5, dadurch **gekennzeichnet,** dass die Basisschicht mittels Siebdruck und die Deckschicht mittels Aufstreuung auf die zu beschichtenden Flächengebilde aufbringbar sind.

7. Schmelzklebermasse nach einem der Ansprüche 1 bis 6, dadurch **gekennzeichnet,** dass die Schmelzkleberpaste der Basisschicht zusätzlich ein Dispergiermittel auf Polyacrylsäure- oder Polymethacrylsäurebasis oder Polyvinylpyrrolidon, Zelluloseglykolsäure sowie Carbonsäuren, Fettsäuren, Wachssäuren oder auch Molkensäure oder deren Salze enthält.

8. Schmelzklebermasse nach Anspruch 7, dadurch **gekennzeichnet,** dass freie aliphatische Monocarbonsäuren mit 14 bis 25 Kohlenstoffatomen oder deren Salze in der Schmelzkleberpaste enthalten sind.

9. Schmelzklebermasse nach einem der Ansprüche 1 bis 8, dadurch **gekennzeichnet,** dass die Schmelzkleberpaste der Basisschicht zusätzlich Weichmacher in einer Menge von bis zu etwa 6 Gew. %, bezogen auf das Gewicht der nassen Schmelzkleberpaste, enthält.

10. Schmelzklebermasse nach Anspruch 9, dadurch **gekennzeichnet,** dass der Weichmacher o- oder p-Toluolsulfonamid oder ein N-alkyliertes Toluolsulfonamid ist.

11. Schmelzklebermasse nach einem der Ansprüche 1 bis 10, dadurch **gekennzeichnet,** dass die Deckschicht einen Copolyester, ein Copolyamid oder Mischungen davon enthält.

12. Schmelzklebermasse nach einem der Ansprüche 1 bis 11, dadurch **gekennzeichnet,** dass die Schmelzklebermasse ein Gewichtsverhältnis von Schmelzklebertrockenpaste zu Schmelzkleberpulver von etwa 1 : 1 enthält.

13. Verwendung der Schmelzklebermasse nach einem der Ansprüche 1 bis 12 zur rasterförmigen Beschichtung von Flächengebilden, insbesondere Einlagestoffen für Oberbekleidung.

14. Einlagestoff für die Bekleidung, dadurch **gekennzeichnet,** dass er mit einer Schmelzklebermasse nach einem der Ansprüche 1 bis 12 versehen ist.

## Claims

1. Melt adhesive composition for screen-like coating of textile fabrics, in particular of insert materials, using a melt adhesive paste based on copolyester as the base layer and a melt adhesive covering layer sitting thereon, characterised in that the melt adhesive paste contains a mixture of copolyester and low pressure polyethylene in a weight ratio from 2:1 to 2:3, based on the dry weight of the constituents, and in that the low pressure polyethylene has a grain size of 80 µm maximum, a melting point in the range from 122 to 137°C and a melt index in the range from 5 to 30 g/10 minutes of run-out time at a temperature of 190°C and a pressure impact of 21.6 N corresponding to DIN 53 735.

2. Melt adhesive composition according to claim 1, characterised in that the melt adhesive paste is an aqueous-pasty mixture of copolyester and low pressure polyethylene.

3. Melt adhesive composition according to claim 2, characterised in that the dry portion of the melt adhesive paste is 32 to 52 weight %.

4. Melt adhesive composition according to one of claims 1 to 3, characterised in that the coating quantity of the melt adhesive composition is 6 to 15 g/m² of textile fabric after drying and sintering.

5. Melt adhesive composition according to one of claims 1 to 4, characterised in that the copolyester has a grain size of less than 80 µm and a melt index in the range from 5 to 50 g/10 minutes of run-out time at a temperature of 160°C and a pressure impact of 21.6 N.

6. Melt adhesive composition according to one of claims 1 to 5, characterised in that the base layer can be applied to the textile fabric to be coated by means of screen printing and the covering layer by means of sprinkling.

7. Melt adhesive composition according to one of claims 1 to 6, characterised in that the melt adhesive paste of the base layer additionally contains a dispersing agent based on polyacrylic acid or polymethacrylic acid, or polyvinylpyrrolidone, cellulose glycolic acid and carboxylic acids, fatty acids, ceric acids or even lactic acid, or salts thereof.

8. Melt adhesive composition according to claim 7, characterised in that free aliphatic monocarboxylic acids having 14 to 25 carbon atoms or salts thereof are present in the melt adhesive paste.

9. Melt adhesive composition according to one of claims 1 to 8, characterised in that the melt adhesive paste of the base layer additionally contains plasticisers in a amount of up to about 6 weight %, based on the weight of the wet melt adhesive paste.

10. Melt adhesive composition according to claim 9, characterised in that the plasticiser is o-toluenesulphonamide or p-toluenesulphonamide or an N-alkylated toluenesulphonamide.

11. Melt adhesive composition according to one of claims 1 to 10, characterised in that the covering layer contains a copolyester, a copolyamide or mixtures thereof.

12. Melt adhesive composition according to one of claims 1 to 11, characterised in that the melt adhesive composition contains a weight ratio of melt adhesive dry paste to melt adhesive powder of about 1:1.

13. Use of the melt adhesive composition according to one of claims 1 to 12 for screen-like coating of textile fabrics, in particular insert materials for outer clothing.

14. Insert material for clothing, characterised in that it is provided with a melt adhesive composition according to one of claims 1 to 12.

## Revendications

1. Colle fusible pour le revêtement sous forme de trames d' produit de forme étendue, en particulier de doublures, avec une pâte adhésive fusible à base de copolyester, faisant office de couche de base et une couche de couverture en colle fusible, placée dessus, caractérisée en ce que la pâte adhésive fusible contient un mélange de copolyester et de polyéthylène basse pression, en un rapport de poids allant de 2 : 1 à 2 : 3, par rapport au poids à sec des composants, et en ce que le polyéthylène basse pression présente une granulométrie maximale de 80 µm, un point de fusion situé dans la plage allant de 122 à 137 °C et un indice de fusion situé dans la plage allant de 5 à 30 g/10 mn de temps d'écoulement, à une température de 190 °C, et lors de l'application d'une pression de 21,6 N, selon DIN 53 735.

2. Colle fusible selon la revendication 1, caractérisée en ce que la pâte adhésive fusible est un mélange aqueux-pâteux de copolyester et de polyéthylène basse pression.

3. Colle fusible selon la revendication 2, caractérisée en ce que la proportion à sec de pâte adhésive fusible est comprise dans la place allant de 32 à 52 % en poids.

4. Colle fusible selon l'une des revendications 1 à 3, caractérisée en ce que la quantité de revêtement de la colle fusible, après séchage et frittage, est de 6 à 15 g/m² de surface flexible.

5. Colle fusible selon l'une des revendications 1 à 4, caractérisée en ce que le copolyester a une granulométrie inférieure à 80 µm et un indice de fusion situé dans la plage allant dans la plage de 5 à 50 g/10 mn de temps d'écoulement, à une température de 160 °C, et lors de l'application d'une pression de 21,6 N.

6. Colle fusible selon l'une des revendications 1 à 5, caractérisée en ce que la couche de base est susceptible d'être appliquée par sérigraphie et la couche de recouvrement par dispersion sur les produits de forme étendue à revêtir.

7. Colle fusible selon l'une des revendications 1 à 6, caractérisée en ce que la pâte adhésive fusible de la couche de base contient en plus un dispersant à base d'acide polyacrylique ou polymétacrylique ou du polyvinylpyrrolidon, un acide glycolique cellulosique, ainsi que des acides carboniques, des acides gras, des acides parafiniques ou également des acides lactiques, ou leurs sels.

8. Colle fusible selon la revendication 7, caractérisée en ce que des monoacides carbonés aliphatiques libres, contenant de 14 à 25 atomes de carbone, ou leurs sels, sont contenus dans la pâte adhésive fusible.

9. Colle fusible selon l'une des revendications 1 à 8, caractérisée en ce que la pâte adhésive fusible de la couche de base comprend, en plus, un émollient, en une quantité allant jusqu'à à peu près 6 % en poids par rapport au poids de la pâte adhésive fusible humide.

10. Colle fusible selon la revendication 9, caractérisée en ce que l'émollient est un o- ou p-toluolsulfonamide ou un toluolsulfonamide alkylé en N.

11. Colle fusible selon l'une des revendications 1 à 10, caractérisée en ce que la couche de couverture contient un copolyester, un copolyamide, ou des mélanges de ceux-ci.

12. Colle fusible selon l'une des revendications 1 à 11, caractérisée en ce que la masse adhésive fusible contient une proportion en poids de pâte sèche adhésive fusible, par rapport à la poudre adhésive fusible, d'à peu prés 1 : 1.

13. Utilisation de la colle fusible selon l'une des revendications 1 à 12, pour le revêtement sous forme de trames de produits de forme étendue, en particulier de doublures pour des vêtements de dessus.

14. Doublure pour l'habillement, caractérisée en ce qu'elle est pourvue d'une masse adhésive fusible selon l'une des revendications 1 à 12.
